# EUROPÄISCHE PATENTSCHRIFT

(11) **EP 1 081 822 B1**
(45) Veröffentlichungstag und Bekanntmachung des Hinweises auf die Patenterteilung: **02.01.2004**
(21) Anmeldenummer: 00112825.5
(22) Anmeldetag: 17.06.2000
(51) Int. Cl.: H02G 3/12

(54) **Leitungsführungskanal**
Wire raceway
Goulotte pour câbles

(30) Priorität: 28.08.1999 DE 29915094 U
(43) Veröffentlichungstag der Anmeldung: 07.03.2001
(73) Patentinhaber: Tehalit GmbH & Co. KG, 67716 Heltersberg (DE)
(72) Erfinder: Schnurr, Richard, 66957 Vinningen (DE); Kauf, Peter, 66482 Zweibrücken (DE); Schmitt, Erwin, 67659 Kaiserslautern (DE); Schneckmann, Horst, 67705 Trippstadt (DE); Szabo, Thomas, 66849 Landstuhl (DE); Stamer, Gernot, 66879 Kottweiler-Schwanden (DE)
(74) Vertreter: Patentanwälte Möll und Bitterich

(56) Entgegenhaltungen:
- EP-A- 0 271 891
- DE-U- 29 703 641
- FR-A- 2 132 807
- US-A- 4 888 452
- US-A- 5 089 667

## Beschreibung

Die Erfindung betrifft Geräteeinbaukanäle, d. h. Leitungsführungskanäle die für den Einbau von Elektro-Installationsgeräten, z. B. Steckdosen, vorbereitet sind, gemäß dem Oberbegriff des Anspruchs 1 (Siehe FR-A-2 132 807).

Aus der FR-B 2 719 887 oder der EP-B 0 382 597 sind Leitungsführungskanäle bekannt, deren Innenraum mit Hilfe von Trennwänden in mehrere Abteile unterteilt ist. Bei der FR-B 2 719 887 sind die Trennwände einstückig mit dem Kanalunterteil verbunden. Bei der EP-B 0 382 597 können die Trennwände auf eine Vielzahl von parallelen Halteleisten am Boden des Kanalunterteils aufgerastet werden. An ihrer Oberkante besitzen diese Trennwände Verschlussprofile, an denen Kanaldeckel und andere Zusatzelemente befestigt werden können.

Bei beiden vorbekannten Leitungsführungskanälen erstrecken sich die Trennwände über die volle Kanallänge. Falls die Notwendigkeit besteht, mit einer Leitung vom einen Kanalabteil in das benachbarte Kanalabteil zu wechseln, müssen besondere Maßnahmen ergriffen werden. Bei dem Kanal mit abnehmbarer Trennwand muss ein Trennwandabschnitt gekürzt werden, so dass eine Lücke zu dem nachfolgenden Trennwandabschnitt entsteht. Bei dem Kanal mit einstückigen Trennwänden müssen Aussparungen eingearbeitet werden.

Der vorbekannte Stand der Technik hat in der Praxis einige Nachteile. Sind die Trennwände fest angebracht, müssen nachträgliche Ausklinkungen hergestellt werden, damit die elektrischen Leitungen von einem Kanalabteil ins andere geführt werden können. Bei dem Kanal mit den aufsteckbaren Trennwänden lassen sich zwar die Leitungen leichter zwischen den Kanalabteilen wechseln, der Elektroinstallateur muss jedoch jedesmal die Trennwände aufstecken und im Bedarfsfall abnehmen und wieder aufstecken, was wegen der relativ großen Länge der einzelnen Trennwandabschnitte nicht ganz einfach ist. Die über die volle Kanallänge reichenden Trennwände habe auch einen erhöhten Materialverbrauch und ein erhöhtes Gewicht zur Folge, und zwar auch dann, wenn eine Unterteilung der Leitungsführungskanäle in mehrere Abteile gar nicht nötig ist. Dies ist unbefriedigend.

Es ist des weiteren bekannt, an diesen Trennwänden Elektro-Installationsgeräte zu befestigen, beispielsweise Steckdosen. Man vergleiche FR-A 2719 887.

Schließlich ist es bekannt, Elektro-Installationsgeräte an Halteleisten zu befestigen, die an der Innenseite des Bodens des Kanalunterteils angeformt sind. Man vergleiche beispielsweise EP-A 0 240 916 oder auch DE-A 40 03 278, wo zwischen dem Gerät und dem Kanalboden zusätzlich ein Hilfsteil zur Höhenanpassung vorgesehen ist.

Aus der schon erwähnten EP-A 0 240 916 oder auch der DE-U 90 04 774 ist bekannt, das in der Kanalunterteil eingebaute Installationsgerät, vorzugsweise Steckdose, mit einer Klappe abzudecken. Diese Klappe ist so großzügig konstruiert, dass sie die Steckdose mit eingestecktem Stecker überdeckt. Ein Spalt zwischen der Klappe und dem Kanal ermöglicht die Führung des Steckerkabels.

Allen beschriebenen Kanälen ist gemeinsam, dass die Front der Elektro-Installationsgeräte in etwa identisch ist mit der Front des Kanalunterteils. In derart montierte Steckdosen eingesteckte Stecker ragen über die Kanalfront vor. Für die Abdeckklappen gilt dies noch verstärkt Auch dies ist unbefriedigend.

Der vorliegenden Erfindung liegt daher die Aufgabe zugrunde, eine Lösung für die beiden zuvor beschriebenen Probleme zu schaffen und einen Leitungsführungskanal anzugeben, der sich mit geringem Material- und Zeitaufwand herstellen und montieren lässt und die einfache und vor allem platzsparende Montage von Zusatzelementen, seien es Deckel, seien es Elektro-Einbaugeräte, ermöglicht.

Diese Aufgabe wird durch einen Leitungsführungskanal mit den Merkmalen des Anspruchs 1 gelöst.

Bei der vorliegenden Erfindung sind die beiden Funktionen Unterteilung des Kanals in mehrere Abteile und Befestigung von Zusatzelementen unterschiedlichen Funktionseinheiten zugeordnet Für die Unterteilung in Abteile werden herkömmliche Trennwände verwendet, wie sie sich seit Jahrzehnten bewährt haben und die nur dort montiert werden, wo eine solche Unterteilung erforderlich ist. Für die Befestigung der Zusatzelemente werden die erfindungsgemäßen Halter verwendet, die sich mit wenig Materialaufwand produzieren lassen und punktgenau nur dort eingesetzt werden, wo sie benötigt werden.

Auch bei der Konstruktion der erfindungsgemäßen Halter wurde auf Funktionstrennung geachtet.

Die Stützfüße haben nur eine Aufgabe, nämlich zu gewährleisten, dass der erfindungsgemäße Halter senkrecht auf dem Boden des Kanalunterteils steht. Dadurch sitzt der Profilkopf immer an der richtigen Stelle, vorzugsweise um den bzw. die Deckel zu halten. Für den festen Sitz des Halters am Kanalunterteil sorgen nur die Haltefüße.

Gemäß der Erfindung umfasst der Halter wenigstens einen festen Klammerschenkel mit dem einen Haltefuß, passend zur Halteleiste, und wenigstens einen beweglichen Klammerschenkel mit dem anderen Haltefuß, ebenfalls passend zur Halteleiste und mit dem Haltefuß am festen Klammerschenkel kooperierend, wobei der bewegliche Klammerschenkel als federnde Zunge ausgestattet ist. Dadurch lässt sich der Halter leicht auf die Halteleiste aufstecken und nur schwer wieder abnehmen.

Vorteilhafterweise sitzt der bewegliche Klammerschenkel in einem Ausschnitt des Grundkörpers. Dies führt zu einer Verringerung des Raum- und des Materialbedarfs.

Gemäß einer Weiterbildung der Erfindung sind am Grundkörper Haltekonsolen, vorzugsweise in Leistenform, vorgesehen. Damit lässt sich eine verbesserte Verbindung zu Zusatzelementen, z.B. Steckdosen, erreichen. Außerdem wirkt diese Konsolenleiste als Kabelrückhalt.

Gemäß einer Weiterbildung der Erfindung ist im beweglichen Klammerschenkel ein Langloch vorgesehen. Dank des Langlochs können Zusatzelemente, die mit einer entsprechenden Haltevorrichtung, beispielsweise einem Drehknebel, ausgerüstet sind, am Halter justierbar und lösbar befestigt werden. Im einfachsten Fall kann es sich dabei um ein Riegelelement handeln, mit dessen Hilfe der bewegliche Klammerschenkel so verspannt wird, dass sich der Halter nicht mehr von der Halteleiste am Boden des Kanalunterteils lösen kann. Auf die gleiche Weise lassen sich jedoch auch andere Geräte, beispielsweise Elektro-Einbaugeräte, anbringen, beispielsweise Steckdosen. Da sich der Halter selbst im wesentlichen innerhalb des Kanalunterteils befindet, befindet sich auch eine solche Steckdose im Inneren des Kanalunterteils. Die Zugänglichkeit der Steckdose für den Benutzer kann durch eine Schrägstellung des Halters verbessert werden.

Gemäß einer alternativen Ausgestaltung ist das zentrale Langloch im Grundkörper des Halters vorgesehen.

Gemäß einer Weiterbildung der Erfindung umfasst der Halter wenigstens eine weitere Justier- und Befestigungsvorrichtung für ein Einbaugerät. Im einfachsten Fall handelt es sich dabei um Justierbohrungen, die mit entsprechenden Justierzapfen am Gerät kooperieren.

Gemäß einer Ausgestaltung umfasst der Halter wenigstens eine Befestigungsvorrichtung für ein Zusatzelement. Im einfachsten Fall handelt es sich dabei um Achszapfen zum Ansetzen einer Klappe, die den Teil des Kanals abdeckt, in dem das Elektro-Einbaugerät montiert ist.

Vorteilhafterweise ist der Halter einstückig aus Kunststoff gespritzt.

Anhand der Zeichnung soll die Erfindung in Form von Ausführungsbeispielen näher erläutert werden. Es zeigen
- Fig. 1: in einer perspektivischen Darstellung einen Leitungsführungskanal mit Kanalunterteil, drei Deckeln und Installationsdose,
- Fig. 2: einen Querschnitt durch einen zweiten Leitungsführungskanal,
- Fig. 3: einen ersten Halter als Frontansicht,
- Fig. 4: den Halter der Fig. 3 als Seitenansicht,
- Fig. 5: einen Schnitt entlang der Linie V-V durch den Halter der Fig. 3,
- Fig. 6: einen Schnitt entlang der Linie VI-VI durch den Halter der Fig. 3,
- Fig. 7: einen Schnitt entlang der Linie VII-VII durch den Halter der Fig. 3,
- Fig. 8: einen zweiten Halter als Frontansicht und
- Fig. 9: eine Seitenansicht des Halters der Fig. 8.

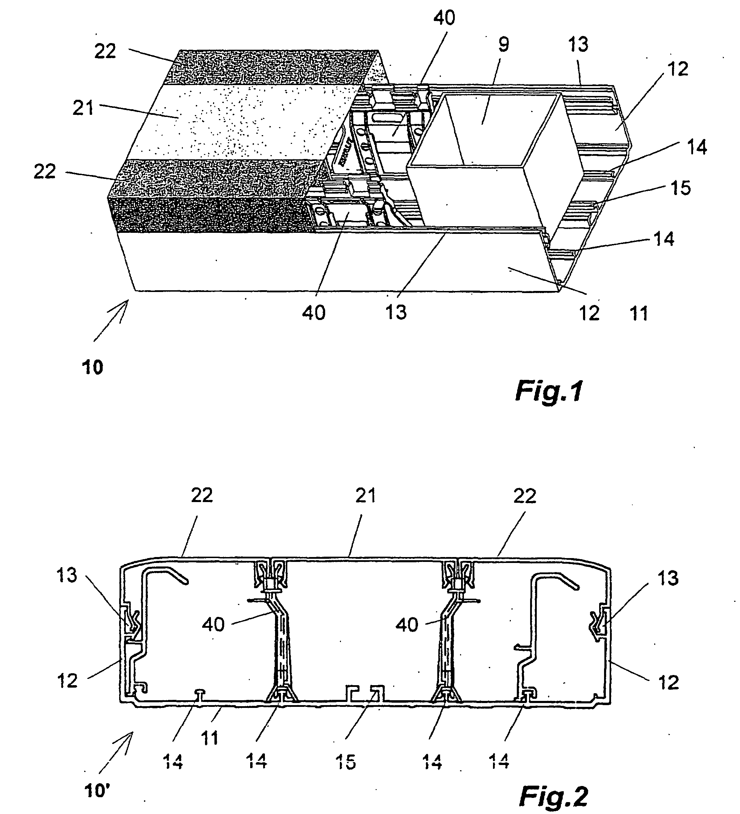

Fig. 1 zeigt in perspektivischer Darstellung einen Leitungsführungskanal mit rechteckigem Querschnitt, bestehend aus einem Kanalunterteil 10, welches mit drei Deckeln 21, 22 verschlossen ist. In das Kanalunterteil 10 eingesetzt erkennt man eine handelsübliche Installationsdose 9. Halter 40, die auf Halteleisten 14 im Kanalunterteil 10 aufgerastet sind, halten die Kanaldeckel 21, 22.

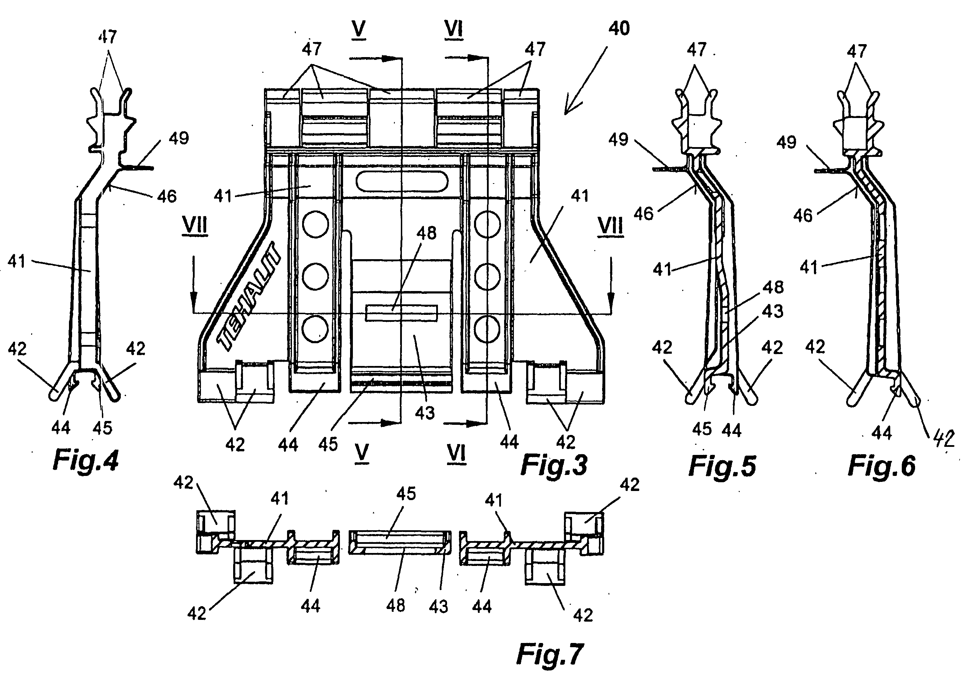

Fig. 2 zeigt einen Querschnitt durch eine zweiten Leitungsführungskanal 10'. Die Halter 40 sind auf die Halteleisten 14 aufgerastet und stützen sich mit ihren Stützfüßen auf dem Boden 11 des Leitungsführungskanals 10' ab. Dadurch stehen sie in allen Fällen exakt senkrecht, so dass die Deckel 21, 22 stets paßgenau aufgerastet werden können. Einzelheiten der Halter 40 ergeben sich aus den nachfolgenden Fig. 3 bis 7.

Die Fig. 3 und 4 zeigen den Halter 40 als Front- und Seitenansicht. Man erkennt zunächst einen flächenhaften Grundkörper 41, an dessen unterem Ende zwei Paar Stützfüße 42 angebracht sind. Am Grundkörper 41 sind des weiteren feste Haltefüße 44 angebracht, passend zu der Halteleiste 14. In einem Ausschnitt des Grundkörpers 41 ist ein als federnde Zunge ausgebildeter beweglicher Klammerschenkel 43 mit einem Haltefuß 45 vorgesehen, der zu der Halteleiste 14 paßt und mit den festen Haltefüßen 44 kooperiert.

Die Positionen der Stützfüße 42 und der Haltefüße 44, 45 ergeben sich auch aus dem Schnitt VII-VII in Fig. 7.

Am oberen Ende des Grundkörpers 41 erkennt man einen Profilkopf 47.

Wie die Seitenansicht in Fig. 4 bzw. die Schnitte V-V und VI-VI in den Fig. 5 und 6 zeigen, ist der Profilkopf 47 gegenüber dem Grundkörper 41 seitlich abgekröpft. Im Bereich der Kröpfung 46 ist unterhalb des Profilkopfes 47 eine Konsolenleiste 49 vorgesehen. An dieser können Zusatzelemente befestigt werden, sei es durch Anstecken, Anschrauben oder Anklemmen. Gegebenenfalls wirkt die Konsolenleiste 45 auch als Kabelrückhalteleiste.

Der bewegliche Klammerschenkel 43 weist ein Langloch 48 auf. Dieses kann bei Bedarf ein Verriegelungselement (nicht dargestellt) aufnehmen, mit dessen Hilfe die Haltefüße 44, 45 blockiert werden.

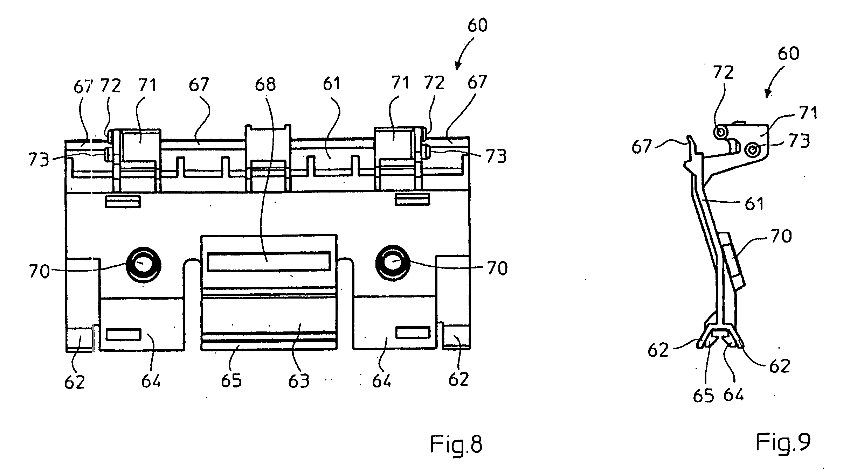

Fig. 8 als Frontansicht und Fig. 9 als Seitenansicht zeigen einen zweiten Halter 60. Die Position und Funktion der Stütz- und Haltefüße 62, 64, 65 sind im wesentlichen unverändert. Der Grundkörper 61 ist jedoch über eine größere Fläche gegen die Senkrechte geneigt, was die Zugänglichkeit eines an diesem Halter 60 montierten Etektro-Einbaugerätes verbessert.

Der zentrale Klammerschenkel 63 ist nicht als federnde Zunge sondern starr ausgebildet. Dadurch graben sich die Haltefüße 64, 65 unlösbar in die Halteleiste am Boden des Kanalunterteils ein.

Im Grundkörper 61 erkennt man ein zentrales Langloch 68, an dem Einbaugeräte mit geeigneten Haltevorrichtungen fixiert werden können. Rechts und links daneben erkennt man Zentrier- und Justierbohrungen 70, die die exakte Position eines mit entsprechenden Justierzapfen versehenen Einbaugerätes gewährleisten.

Im Bereich des Profilkopfes 67 sind zwei Konsolen 71 vorgesehen, an denen paarweise Achszapfen 72, 73 angeformt sind. An diesen Achszapfen 72, 73 können bewegliche Zusatzelemente angelenkt werden, beispielsweise Klappdeckel, die den Kanal im Bereich eines Elektro-Einbaugerätes abdecken.

Die Summe aller Merkmale ergibt einen Multifunktionshalter, der eine Vielzahl von Halte- und Befestigungsfunktionen erfüllen kann, wie sie in der modernen Kanalinstallation vorkommen können.

## Patentansprüche

1. Geräteeinbaukanal, im wesentlichen umfassend
- ein Kanalunterteil (10) mit
- Boden (11),
- Seitenwänden (12) mit Verschlussprofil (13)
- und wenigstens einer Halteleiste (14, 15) auf der Innenseite des Bodens (11),
- wenigstens einen Deckel (21, 22), zu befestigen am Kanalunterteil (10),
- und wenigstens einen Halter (40, 60), der die Verbindung zwischen Kanalunterteil (10) und Deckel (21, 22) bewirkt, wobei:
der Halter (40, 60) einen flächenhaften Grundkörper (41, 61) mit festen Stützfüßen (42, 62), die sich auf dem Boden (11) abstützen,
Haltefüße (44, 45; 64, 65), die den Halter (40, 60) an einer der Halteleisten (14, 15) fixieren,
und einen Profilkopf (47, 67), passend zu den Deckeln (21, 22), umfasst,
**gekennzeichnet durch** die Merkmale:
- der Halter umfasst
- wenigstens einen festen Klammerschenkel mit dem einen Haltefuß (44), passend zu der Halteleiste (14, 15),
- wenigstens einen beweglichen Klammerschenkel (43) mit dem anderen Haltefuß (45), passend zu der Halteleiste (14, 15) und mit dem Haltefuß (44) am festen Klammerschenkel kooperierend.

2. Geräteeinbaukanal nach Anspruch 1, **gekennzeichnet durch** das Merkmal:
- der bewegliche Klammerschenkel (43) sitzt in einem Ausschnitt des Grundkörpers (41).

3. Geräteeinbaukanal nach einem der Ansprüche 1 und 2, **gekennzeichnet durch** das Merkmal:
- am Grundkörper (41) ist eine Konsolenleiste (49) vorgesehen.

4. Geräteeinbaukanal nach einem der Ansprüche 1 bis 3, **gekennzeichnet durch** das Merkmal:
- im beweglichen Klammerschenkel (43) ist ein Langloch (48) vorgesehen.

5. Geräteeinbaukanal nach Anspruch 1, **gekennzeichnet durch** das Merkmal:
- der Halter (60) umfasst ein zentrales Langloch (68) im Grundkörper (61).

6. Geräteeinbaukanal nach einem der Ansprüche 1 bis 5, **gekennzeichnet durch** das Merkmal:
- der Halter (60) umfasst wenigstens eine Justier- und Befestigungsvorrichtung (70) für ein Einbaugerät.

7. Geräteeinbaukanal nach einem der Ansprüche 1 bis 6, **gekennzeichnet durch** das Merkmal:
- der Halter (60) umfasst wenigstens eine Befestigungsvorrichtung (71, 72; 73) für Zusatzelemente.

8. Geräteeinbaukanal nach Anspruch 7, **gekennzeichnet durch** das Merkmal:
- die Befestigungsvorrichtungen (72, 73) sind Achszapfen.

9. Geräteeinbaukanal nach einem der Ansprüche 1 bis 8, **gekennzeichnet durch** das Merkmal:
- der Halter (40) ist einstückig aus Kunststoff gespritzt.

## Claims

1. Appliance installation trunking, essentially comprising
- a trunking lower part (10) with
- bottom (11),
- side walls (12) with closure profile (13)
- and at least one retaining strip (14, 15) on the inside of the bottom (11),
- at least one cover (21, 22), to be fastened to the trunking lower part (10),
- and at least one holder (40, 60) which effects the connection between the trunking lower part (10) and the cover (21, 22), wherein the holder (40, 60) comprises:
a laminar base body (41, 61) with fixed support feet (42, 62) which are supported on the bottom (11),
retaining feet (44, 45; 64, 65) which fix the holder (40, 60) to one of the retaining strips (14, 15),
and a profiled head (47, 67), matching the covers (21, 22),
**characterised by** the features:
- the holder comprises
- at least one fixed clamp leg with one retaining foot (44), matching the retaining strip (14, 15),
- at least one mobile clamp leg (43) with the other retaining foot (45), matching the retaining strip (14, 15) and co-operating with the retaining foot (44) at the fixed clamp leg.

2. Appliance installation trunking according to Claim 1, **characterised by** the feature:
- the mobile clamp leg (43) is seated in a cut-out of the base body (41).

3. Appliance installation trunking according to either of Claims 1 and 2, **characterised by** the feature:
- a bracket strip (49) is provided at the base body (41).

4. Appliance installation trunking according to any one of Claims 1 to 3, **characterised by** the feature:
- an elongate hole (48) is provided in the mobile clamp leg (43).

5. Appliance installation trunking according to Claim 1, **characterised by** the feature:
- the holder (60) comprises a central elongate hole (68) in the base body (61).

6. Appliance installation trunking according to any one of Claims 1 to 5, **characterised by** the feature:
- the holder (60) comprises at least one adjusting and fastening device (70) for a built-in appliance.

7. Appliance installation trunking according to any one of Claims 1 to 6, **characterised by** the feature:
- the holder (60) comprises at least one fastening device (71, 72; 73) for auxiliary elements.

8. Appliance installation trunking according to Claim 7, **characterised by** the feature:
- the fastening devices (72, 73) are axial pins.

9. Appliance installation trunking according to any one of Claims 1 to 8, **characterised by** the feature:
- the holder (60) is integrally injection moulded from a plastics material.

## Revendications

1. Goulotte d'installation électrique comprenant pour l'essentiel
- une partie inférieure de goulotte (10) avec
- un fond (11),
- des parois latérales (12) avec profilé de fermeture (13)
- et au moins un rail de fixation (14, 15) sur la face intérieure du fond (11),
- au moins un couvercle (21, 22) à fixer sur la partie inférieure de goulotte (10),
- et au moins un support (40, 60) qui assure la liaison entre la partie inférieure de goulotte (10) et le couvercle (21, 22), le support (40, 60) comprenant:
un corps de base plan (41, 61) muni de pieds de support fixes (42, 62) qui s'appuient sur le fond (11),
des pieds de retenue (44, 45 ; 64, 65) qui fixent le support (40, 60) sur un des rails de fixation (14, 15),
et une tête profilée (47, 67) adaptée aux couvercles (21, 22),
**caractérisée par le fait que**
le support comprend
- au moins une jambe de fixation fixe avec un pied de retenue (44), correspondant au rail de fixation (14, 15),
- au moins une jambe de fixation mobile (43) avec l'autre pied de retenue (45), correspondant au rail de fixation (14, 15), et coopérant avec le pied de retenue (44) sur la jambe de fixation fixe.

2. Goulotte d'installation électrique selon la revendication 1, **caractérisée par le fait que**
- la jambe de fixation mobile (43) est logée dans une découpe du corps de base (41).

3. Goulotte d'installation électrique selon l'une des revendications 1 ou 2, **caractérisée par le fait que**
- il est prévu une moulure console ou rebord (49) sur le corps de base (41).

4. Goulotte d'installation électrique selon l'une des revendications 1 à 3, **caractérisée par le fait que**
- il est prévu un trou oblong (48) dans la jambe de fixation mobile (43).

5. Goulotte d'installation électrique selon la revendication 1, **caractérisée par le fait que**
- le support (60) comprend un trou oblong central (68) dans le corps de base (61).

6. Goulotte d'installation électrique selon l'une des revendications 1 à 5, **caractérisée par le fait que**
- le support (60) comprend au moins un dispositif d'ajustage et de fixation (70) pour un appareil à encastrer.

7. Goulotte d'installation électrique selon l'une des revendications 1 à 6, **caractérisée par le fait que**
- le support (60) comprend au moins un dispositif de fixation (71, 72 ; 73) pour des éléments supplémentaires.

8. Goulotte d'installation électrique selon la revendication 7, **caractérisée par le fait que**
- les dispositifs de fixation (72, 73) sont des tourillons.

9. Goulotte d'installation électrique selon l'une des revendications 1 à 8, **caractérisée par le fait que**
- le support (40) est moulé en plastique en une pièce.
